# EUROPEAN PATENT SPECIFICATION

(11) **EP 3 725 752 B1**
(45) Date of publication and mention of the grant of the patent: **12.07.2023**
(21) Application number: 18872300.1
(22) Date of filing: 19.12.2018
(51) Int. Cl.: C04B 28/02, C04B 40/00, C04B 103/65

(54) **CONCRETE WATERPROOFING AGENT**
HYDROPHOBIERUNGSMITTEL FÜR BETON
AGENT IMPERMÉABILISANT POUR BÉTON

(30) Priority: 04.06.2018 CN 201810567436
(43) Date of publication of application: 21.10.2020
(73) Proprietor: Zhang, Yuwen, Shandong 266011 (CN)
(72) Inventor: Zhang, Yuwen, Shandong 266011 (CN)
(74) Representative: Lang, Christian
(86) International application number: PCT/CN2018/121945
(87) International publication number: WO 2019/086052

(56) References cited:
- CN-A- 103 880 319
- CN-A- 104 926 195
- JP-A- H07 179 849
- JP-A- H09 142 904
- JP-A- 2000 281 411

## Description

The disclosure relates to a waterproofing agent for concrete.

The disclosure relates to the field of concrete. The concrete includes micro-cracks being a basic characteristic thereof. Currently, the anticorrosive waterproof agents sold in the market fail to fill the micro-cracks in the concrete, which leads to leakage and invasion of harmful substances through the micro-cracks. GB 50119-2013 Code for utility technical of concrete admixture points that ferric chloride as an anticorrosive waterproofing agent is mixed with water to yield ferric hydroxide colloids to fill the micro-cracks. However, the production of the ferric hydroxide colloids is asynchronous with the formation of the concrete, so that the ferric chloride is not an ideal waterproofing agent. Expansive material can cause a beneficial increase in volume of concrete, but fails to decisively reduce or fill the micro-cracks. Properties of organic compounds are greatly different from that of inorganic compounds in the concrete, so different that the organic compounds cannot act as crystal nucleuses whose growth is induced by the edges and corners of the cement particles, and also cannot properly fill and block the micro-cracks. Some researchers make the effort to provide waterproof and corrosion protection for the concrete by reducing the surface tension and the drying shrinkage of the concrete, and minimize the cracks in the concrete. But the effects of the above methods are just the same as an expansive agent that fails to change the basic characteristic: fairly large numbers of micro-cracks in the concrete.

The disclosure provides a waterproofing agent for concrete, which effectively improve the leakage and erosion resistance of concrete.

To achieve the abovementioned objective, the following technical solution is adopted. Ferric ions (trivalent) are combined with three ligands comprising glacial acetic acid, 8-hydroxyquinoline, and sodium pyrosulfate to form a complex compound. The changes of the pH value and concentration of the cement aqueous solution of concrete are recorded as indicating parameters to start the reaction process to form Fe(OH)₃ colloids. That is, the Fe(OH)₃ colloids are not produced immediately after water is added to the cement, when the concentration of the aqueous solution of the cement in the concrete increases by about 2-3 times, the reaction process is initiated to form Fe(OH)₃ colloids.

Advantages of the disclosure are as follows:
1. By analyzing the change of the concentration of the aqueous solution in the concrete, the waterproofing agent of the disclosure can control the production time of the ferric hydroxide colloids, thus avoiding the instant generation of the ferric hydroxide colloids once the ferric chloride waterproof agent contacts water.
2. The ferric hydroxide colloids are produced in the micro-cracks and the edges and corners of the cement particles induce the growth of crystal nucleuses, thereby blocking the micro-cracks and preventing the ingress of water molecular and other corrosive substances into the concrete.
3. The anticorrosive waterproof mechanism provides a clear and known procedure for analysis of the solution in the concrete, leading to a desired anticorrosive waterproof effect on increasing the performances of the concrete.
4. The waterproofing agent of the disclosure is a no-pollution green product that is not harmful to the environment or human body.
5. The process for preparing the waterproofing agent is simple, and the reagents required for preparing the waterproofing agent are used in small amounts.

To further illustrate, embodiments detailing a waterproofing agent for concrete are described below. It should be noted that the following embodiments are intended to describe and not to limit the disclosure.

The disclosure provides a waterproofing agent for concrete comprising:
1-60 parts by weight of a compound selected from the group consisting of ammonium ferric sulphate, ferric chloride, ferric sulphate, polyferric sulphate, and a mixture thereof;
1-30 parts by weight of glacial acetic acid;
1-40 parts by weight of 8-hydroxyquinoline, methyl 8-hydroxyquinoline or a mixture thereof; and
1-50 parts by weight of sodium pyrosulphate.

### Example 1

A waterproofing agent for concrete comprises 29 parts by weight of ammonium ferric sulphate, 3.6 parts by weight of glacial acetic acid, 4.4 parts by weight of 8-hydroxyquinoline, and 24 parts by weight of sodium pyrosulphate.

### Example 2

A waterproofing agent for concrete comprises 9.7 parts by weight of ammonium ferric sulphate, 1.2 parts by weight of glacial acetic acid, 1.4 parts by weight of 8-hydroxyquinoline, and 8 parts by weight of sodium pyrosulphate.

### Comparative Example 3

A waterproofing agent for concrete comprises 9.8 parts by weight of ferric chloride, 3.6 parts by weight of glacial acetic acid, and 4.4 parts by weight of 8-hydroxyquinoline.

### Example 4

A waterproofing agent for concrete comprises 12 parts by weight of ferric sulphate, 3.6 parts by weight of glacial acetic acid, 4.4 parts by weight of 8-hydroxyquinoline, and 24 parts by weight of sodium pyrosulphate.

The raw materials of the waterproofing agent are easily available and environmentally friendly. The equipment and the process for preparing the waterproofing agent are simple. The usage of mixing waterproofing agent with the concrete is the same as other concrete admixtures.

The ferric chloride, ammonium ferric sulphate, ferric sulphate, polyferric sulphate or a mixture thereof is for providing ferric ion.

The glacial acetic acid is for providing acetate ion. In another example not falling within the scope of the claims, the acetate ion can be alternatively provided by glacial acetic acid or a mixture comprising acetate ion.

The sodium pyrosulphate is for providing pyrosulphate ion. In another example not falling within the scope of the claims, the pyrosulphate ion is provided by sodium pyrosulphate or a mixture comprising pyrosulphate ion.

The role of 8-hydroxyquinoline is to introduce oxygen and nitrogen element ligands, or the oxygen and nitrogen element ligands is added separately or mixedly by 8-hydroxyquinoline or methyl 8-hydroxyquinoline.

## Claims

1. A composition of matter, comprising:
1-60 parts by weight of a compound selected from the group consisting of ammonium ferric sulphate, ferric chloride, ferric sulphate, polyferric sulphate, and a mixture thereof;
1-30 parts by weight of glacial acetic acid;
1-40 parts by weight of 8-hydroxyquinoline or methyl 8-hydroxyquinoline or a mixture thereof; and
1-50 parts by weight of sodium pyrosulphate.

## Patentansprüche

1. Eine Stoffzusammensetzung, umfassend:
1-60 Gewichtsteile einer Verbindung, ausgewählt aus der Gruppe bestehend aus Ammoniumeisensulfat, Eisenchlorid, Eisensulfat, Polyeisensulfat und einer Mischung davon;
1-30 Gewichtsteile Eisessig-Säure;
1-40 Gewichtsteile 8-Hydroxychinolin oder Methyl-8-Hydroxychinolin oder ein Gemisch davon; und
1-50 Gewichtsteile Natriumpyrosulfat.

## Revendications

1. Composition de matière, comprenant :
1-60 parties en poids d'un composé sélectionné dans le groupe consistant en le sulfate ferrique d'ammonium, le chlorure ferrique, le sulfate ferrique, un polysulfate ferrique, et un mélange de ceux-ci ;
1-30 parties en poids d'acide acétique glacial ;
1-40 parties en poids de 8-hydroxyquinoléine ou de méthyl-8-hydroxyquinoléine ou d'un mélange de celles-ci ; et
1-50 parties en poids de pyrosulfate de sodium.
